# EUROPEAN PATENT APPLICATION

(11) **EP 4 447 373 A1**
(43) Date of publication of application: **16.10.2024**
(21) Application number: 24170056.6
(22) Date of filing: 12.04.2024
(51) Int. Cl.: H04L 5/00

(54) **DYNAMIC GAP SYMBOL IN SIDELINK POSITIONING REFERENCE SIGNAL RESOURCE CONFIGURATION**

(30) Priority: 13.04.2023 US 202363459145 P
(71) Applicant: Nokia Technologies Oy, 02610 Espoo (FI)
(72) Inventor: KEATING, Ryan, CHICAGO, 60622 (US); WILDSCHEK, Torsten, GLOUCESTER, GL4 5TW (GB); SAHIN, Taylan, 81739 MUNICH (DE); CHA, Hyun-Su, CHICAGO, 60601 (US); KESHAVAMURTHY, Prajwal, 81241 MUNICH (DE)
(74) Representative: Script Intellectual Property LLP

(57) **Abstract**

Systems, methods, apparatuses, and computer program products for dynamic gap symbol in sidelink positioning reference signal (SL PRS) resource configuration. A method may include receiving, from a user equipment, a sidelink control information indicating whether a gap symbol exists for a sidelink positioning reference signal transmission. The method may also include determining a time domain allocation of the sidelink positioning reference signal. The method may further include receiving, from the user equipment, a sidelink positioning reference signal with or without the gap symbol. In addition, the method may include performing a positioning computation based on the sidelink positioning reference signal received from the user equipment.

## Description

### FIELD:

Some example embodiments may generally relate to mobile or wireless telecommunication systems, such as Long Term Evolution (LTE) or fifth generation (5G) new radio (NR) access technology, or 5G beyond, or other communications systems. For example, certain example embodiments may relate to apparatuses, systems, and/or methods for dynamic gap symbol in sidelink positioning reference signal (SL PRS) resource configuration.

### BACKGROUND:

Examples of mobile or wireless telecommunication systems may include the Universal Mobile Telecommunications System (UMTS) Terrestrial Radio Access Network (UTRAN), LTE Evolved UTRAN (E-UTRAN), LTE-Advanced (LTE-A), MulteFire, LTE-A Pro, fifth generation (5G) radio access technology or NR access technology, and/or 5G-Advanced. 5G wireless systems refer to the next generation (NG) of radio systems and network architecture. 5G network technology is mostly based on NR technology, but the 5G (or NG) network can also build on E-UTRAN radio. It is estimated that NR may provide bitrates on the order of 10-20 Gbit/s or higher, and may support at least enhanced mobile broadband (eMBB) and ultra-reliable low-latency communication (URLLC) as well as massive machine-type communication (mMTC). NR is expected to deliver extreme broadband and ultra-robust, low-latency connectivity and massive networking to support the IoT.

### SUMMARY:

Some example embodiments may be directed to a method. The method may include receiving, from a user equipment, a sidelink control information indicating whether a gap symbol exists for a sidelink positioning reference signal transmission. The method may also include determining a time domain allocation of the sidelink positioning reference signal. The method may further include receiving, from the user equipment, a sidelink positioning reference signal with or without the gap symbol. In addition, the method may include performing a positioning computation based on the sidelink positioning reference signal received from the user equipment.

Other example embodiments may be directed to an apparatus. The apparatus may include at least one processor and at least one memory including computer program code. The at least one memory and computer program code may be configured to, with the at least one processor, cause the apparatus at least to receive, from a user equipment, a sidelink control information indicating whether a gap symbol exists for a sidelink positioning reference signal transmission. The apparatus may also be caused to determine a time domain allocation of the sidelink positioning reference signal. The apparatus may further be caused to receive, from the user equipment, a sidelink positioning reference signal with or without the gap symbol. In addition, the apparatus may be caused to perform a positioning computation based on the sidelink positioning reference signal received from the user equipment.

Other example embodiments may be directed to an apparatus. The apparatus may include means for receiving, from a user equipment, a sidelink control information indicating whether a gap symbol exists for a sidelink positioning reference signal transmission. The apparatus may also include means for determining a time domain allocation of the sidelink positioning reference signal. The apparatus may further include means for receiving, from the user equipment, a sidelink positioning reference signal with or without the gap symbol. In addition, the apparatus may include means for performing a positioning computation based on the sidelink positioning reference signal received from the user equipment.

In accordance with other example embodiments, a non-transitory computer readable medium may be encoded with instructions that may, when executed in hardware, perform a method. The method may include receiving, from a user equipment, a sidelink control information indicating whether a gap symbol exists for a sidelink positioning reference signal transmission. The method may also include determining a time domain allocation of the sidelink positioning reference signal. The method may further include receiving, from the user equipment, a sidelink positioning reference signal with or without the gap symbol. In addition, the method may include performing a positioning computation based on the sidelink positioning reference signal received from the user equipment.

Other example embodiments may be directed to a computer program product that performs a method. The method may include receiving, from a user equipment, a sidelink control information indicating whether a gap symbol exists for a sidelink positioning reference signal transmission. The method may also include determining a time domain allocation of the sidelink positioning reference signal. The method may further include receiving, from the user equipment, a sidelink positioning reference signal with or without the gap symbol. In addition, the method may include performing a positioning computation based on the sidelink positioning reference signal received from the user equipment.

Other example embodiments may be directed to an apparatus that may include circuitry configured to receive, from a user equipment, a sidelink control information indicating whether a gap symbol exists for a sidelink positioning reference signal transmission. The apparatus may also include circuitry configured to determine a time domain allocation of the sidelink positioning reference signal. The apparatus may further include circuitry configured to receive, from the user equipment, a sidelink positioning reference signal with or without the gap symbol. In addition, the apparatus may include circuitry configured to perform a positioning computation based on the sidelink positioning reference signal received from the user equipment.

Certain example embodiments may be directed to a method. The method may include determining whether a gap symbol is needed before or after a sidelink positioning reference signal. The method may also include transmitting, to a user equipment, a sidelink control information indicating whether a gap symbol exists for a sidelink positioning reference signal transmission. The method may further include transmitting, to the user equipment, the sidelink positioning reference signal with or without the gap symbol.

Other example embodiments may be directed to an apparatus. The apparatus may include at least one processor and at least one memory including computer program code. The at least one memory and computer program code may be configured to, with the at least one processor, cause the apparatus at least to determine whether a gap symbol is needed before or after a sidelink positioning reference signal. The apparatus may also be caused to transmit, to a user equipment, a sidelink control information indicating whether a gap symbol exists for a sidelink positioning reference signal transmission. The apparatus may further be caused to transmit, to the user equipment, the sidelink positioning reference signal with or without the gap symbol.

Other example embodiments may be directed to an apparatus. The apparatus may include means for determining whether a gap symbol is needed before or after a sidelink positioning reference signal. The apparatus may also include means for transmitting, to a user equipment, a sidelink control information indicating whether a gap symbol exists for a sidelink positioning reference signal transmission. The apparatus may further include means for transmitting, to the user equipment, the sidelink positioning reference signal with or without the gap symbol.

In accordance with other example embodiments, a non-transitory computer readable medium may be encoded with instructions that may, when executed in hardware, perform a method. The method may include determining whether a gap symbol is needed before or after a sidelink positioning reference signal. The method may also include transmitting, to a user equipment, a sidelink control information indicating whether a gap symbol exists for a sidelink positioning reference signal transmission. The method may further include transmitting, to the user equipment, the sidelink positioning reference signal with or without the gap symbol.

Other example embodiments may be directed to a computer program product that performs a method. The method may include determining whether a gap symbol is needed before or after a sidelink positioning reference signal. The method may also include transmitting, to a user equipment, a sidelink control information indicating whether a gap symbol exists for a sidelink positioning reference signal transmission. The method may further include transmitting, to the user equipment, the sidelink positioning reference signal with or without the gap symbol.

Other example embodiments may be directed to an apparatus that may include circuitry configured to determine whether a gap symbol is needed before or after a sidelink positioning reference signal. The apparatus may also include circuitry configured to transmit, to a user equipment, a sidelink control information indicating whether a gap symbol exists for a sidelink positioning reference signal transmission. The apparatus may further include circuitry configured to transmit, to the user equipment, the sidelink positioning reference signal with or without the gap symbol.

Some example embodiments may be directed to a method. The method may include configuring a user equipment with a configuration that indicates whether the user equipment is allowed to request to use a gap symbol in a sidelink positioning reference signal resource. The method may also include configuring the user equipment with a configuration that indicates whether a gap symbol indication in a sidelink control information is allowed in a resource pool or not.

Other example embodiments may be directed to an apparatus. The apparatus may include at least one processor and at least one memory including computer program code. The at least one memory and computer program code may be configured to, with the at least one processor, cause the apparatus at least to configure a user equipment with a configuration that indicates whether the user equipment is allowed to request to use a gap symbol in a sidelink positioning reference signal resource. The apparatus may also be caused to configure the user equipment with a configuration that indicates whether a gap symbol indication in a sidelink control information is allowed in a resource pool or not.

Other example embodiments may be directed to an apparatus. The apparatus may include means for configuring a user equipment with a configuration that indicates whether the user equipment is allowed to request to use a gap symbol in a sidelink positioning reference signal resource. The apparatus may also include means for configuring the user equipment with a configuration that indicates whether a gap symbol indication in a sidelink control information is allowed in a resource pool or not.

In accordance with other example embodiments, a non-transitory computer readable medium may be encoded with instructions that may, when executed in hardware, perform a method. The method may include configuring a user equipment with a configuration that indicates whether the user equipment is allowed to request to use a gap symbol in a sidelink positioning reference signal resource. The method may also include configuring the user equipment with a configuration that indicates whether a gap symbol indication in a sidelink control information is allowed in a resource pool or not.

Other example embodiments may be directed to a computer program product that performs a method. The method may include configuring a user equipment with a configuration that indicates whether the user equipment is allowed to request to use a gap symbol in a sidelink positioning reference signal resource. The method may also include configuring the user equipment with a configuration that indicates whether a gap symbol indication in a sidelink control information is allowed in a resource pool or not.

Other example embodiments may be directed to an apparatus that may include circuitry configured to configure a user equipment with a configuration that indicates whether the user equipment is allowed to request to use a gap symbol in a sidelink positioning reference signal resource. The apparatus may also include circuitry configured to configure the user equipment with a configuration that indicates whether a gap symbol indication in a sidelink control information is allowed in a resource pool or not.

### BRIEF DESCRIPTION OF THE DRAWINGS:

For proper understanding of example embodiments, reference should be made to the accompanying drawings, wherein:
FIG. 1 illustrates an example sidelink (SL) positioning scenario.
FIG. 2 illustrates an example signal diagram, according to certain example embodiments.
FIG. 3 illustrates an example flow diagram of a method, according to certain example embodiments.
FIG. 4 illustrates an example flow diagram of another method, according to certain example embodiments.
FIG. 5 illustrates an example flow diagram of a further method, according to certain example embodiments.
FIG. 6 illustrates a set of apparatuses, according to certain example embodiments.

### DETAILED DESCRIPTION:

It will be readily understood that the components of certain example embodiments, as generally described and illustrated in the figures herein, may be arranged and designed in a wide variety of different configurations. The following is a detailed description of some example embodiments of systems, methods, apparatuses, and computer program products for dynamic gap symbol in sidelink positioning reference signal (SL PRS) resource configuration.

The features, structures, or characteristics of example embodiments described throughout this specification may be combined in any suitable manner in one or more example embodiments. For example, the usage of the phrases "certain embodiments," "an example embodiment," "some embodiments," or other similar language, throughout this specification refers to the fact that a particular feature, structure, or characteristic described in connection with an embodiment may be included in at least one embodiment. Thus, appearances of the phrases "in certain embodiments," "an example embodiment," "in some embodiments," "in other embodiments," or other similar language, throughout this specification do not necessarily refer to the same group of embodiments, and the described features, structures, or characteristics may be combined in any suitable manner in one or more example embodiments. Further, the terms "base station", "cell", "node", "gNB", "network" or other similar language throughout this specification may be used interchangeably.

As used herein, "at least one of the following: <a list of two or more elements>" and "at least one of <a list of two or more elements>" and similar wording, where the list of two or more elements are joined by "and" or "or," mean at least any one of the elements, or at least any two or more of the elements, or at least all the elements.

As described herein, a target user equipment (UE) may correspond to a UE to be positioned (e.g., using sidelink (SL) such as, for example, PC5 interface). An anchor UE may correspond to a UE supporting positioning of the target UE (e.g., by transmitting and/or receiving reference signals for positioning, providing positioning-related information, etc., over the SL interface). SL positioning may correspond to positioning the UE using reference signals transmitted over SL (i.e., PC5 interface, to obtain absolute position, relative position, or ranging information). Further, ranging may correspond to determination of the distance and/or the direction between a UE and another entity such as, for example, an anchor UE.

Various solutions have been considered for support of SL positioning (including ranging) in New Radio (NR) systems including RAN1, RAN2, RAN3, and RAN4. The solutions have specified sidelink positioning reference signal (SL PRS) for support of SL positioning such that the SL PRS uses a comb-based (full RE mapping pattern is not precluded) frequency domain structure, and a pseudorandom-based sequence where the existing sequence of downlink positioning reference signal (DL-PRS) is used as a starting point. There is also support of resource allocation for a shared resource pool with SL communication, and a dedicated resource pool for SL PRS. A dedicated SL PRS resource pool may be (pre-)configured in the sidelink bandwidth part (SL BWP) of a carrier. Thus, multiple SL PRS resources may be supported within one slot at least in the case of dedicated resource pools. The dedicated resource pool may be a pool configured specifically for at least SL PRS and related control signaling. A resource pool may be composed of contiguous resource blocks and contiguous or non-contiguous slots that have been preconfigured or configured for sidelink communications. The resource pool may be defined in a sidelink bandwidth part.

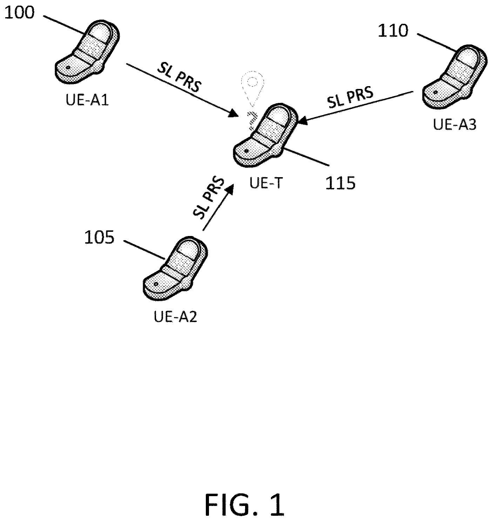

FIG. 1 illustrates an example SL positioning scenario. The scenario illustrated in FIG. 1 includes a target UE 115 (UE-T), and anchor UEs 100, 105, 110 (UE-A1, UE-A2, and UE-A3). SL positioning may be based on transmissions of SL PRS by one or more anchor UEs 100, 105, 110 to be received by a target UE 115 in, for example, SL time difference of arrival (TDOA) methods, or SL PRS exchange between the anchor(s) and the target UEs. The SL PRS exchange between the anchor(s) and the target UEs may be in, for example a SL (multi-) round trip time (RTT) method to enable localization of the target UE 115 and/or ranging of the target UE 115 with respect to a reference UE (e.g., anchor UE 100, 105, 110) within precise latency and accuracy requirements of the corresponding SL positioning.

In the SL positioning scenario illustrated in FIG. 1, the target UE 115 (UE-T) is performing SL positioning by receiving SL PRS from three anchor UEs 100, 105, 110 (UE-A1, UE-A2, and UE-A3). The target UE 115 may also determine its location by using an SL TDOA method. Thus, in the example of FIG. 1, the anchor UEs 100, 105, 110 may provide SL PRS assistance (including SL PRS) to the target UE 115.

In SL positioning, the SL PRS needs to be transmitted and received by UEs involved in the SL positioning session. A SL PRS resource is a collection of symbols that make up the SL PRS transmission. In addition, a SL PRS resource may include a collection of resource block(s) and sequence such as PN or Gold sequence. In legacy SL communications, a gap symbol may be used to enable reception-transmission (Rx-Tx) switching and timing adjustments.

A dedicated gap symbol may be provided after every SL PRS resource. If small sub-slots (i.e., mini-slots) are introduced (e.g., 2 symbols), then this overhead may become quite large and is resource inefficient. It has been proposed to make the gap symbol (pre-)configurable by the network. However, this is not very flexible, and if a gap symbol is always configured as off, then this would not allow some UEs to perform fast Rx-Tx switching which is not desirable (e.g., in case of SL-RTT). In view of these challenges, certain example embodiments may address the problem of how to efficiently allocate the SL PRS resource and associated gap symbols.

Certain example embodiments may provide dynamic signaling of the gap symbol associated with a given SL PRS resource using sidelink control information (SCI). For example, the gap symbol may be after a given SL PRS resource. A SL anchor UE that is going to transmit a SL PRS to one or more other SL UEs may indicate via SCI, if a given SL PRS resource is followed by a gap symbol or not. UEs that decode the SCI may then be able to determine if a given SL PRS resource will be followed by a gap symbol or not. In other example embodiments, the SCI may include the starting symbol of the SL PRS resource. Furthermore, the transmitting anchor UE may indicate within the slot where the SL PRS transmission will begin, and if there is a gap symbol afterwards.

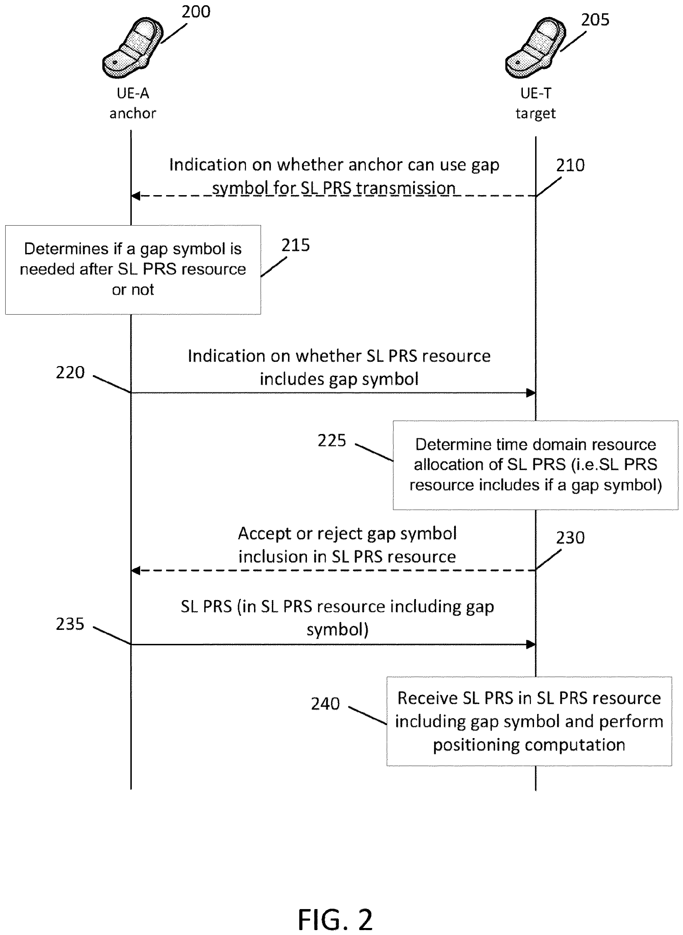

FIG. 2 illustrates an example signal diagram, according to certain example embodiments. As illustrated in FIG. 2, the anchor UE 200 may be involved in a SL positioning session(s), and may need to transmit SL PRS resource(s). At 210, the target UE 205 (or receiving UE) may determine and indicate whether the anchor UE 200 can include the gap symbol. In certain example embodiments, the determination may be based on the target UE's 205 intended/expected transmission or reception status in a subsequent SL PRS resource. Additionally, or alternatively, the target UE 205 may provide the anchor UE 200 a list of SL PRS resources (e.g., sub/mini-slots), and associated gap symbols that can be used for SL PRS transmission. Further, the anchor UE 200 may optionally determine a starting symbol of each SL PRS resource.

At 215, the anchor UE 200 may determine whether or not a gap symbol is needed after each SL PRS resource. According to certain example embodiments, the determination may involve input from the target UEs (or receiving UEs including, for example, other anchor UEs or target UEs, or other UEs that receive the SL PRS but are not necessarily target/anchor UEs) such as whether those UEs would like to perform SL RTT within one slot. At 220, the anchor UE 200 may transmit SCI to the target UE 205 to indicate if a given SL PRS resource includes a gap symbol. In certain example embodiments, the anchor UE 200 may indicate in a single bit if each SL PRS resource does or does not include a gap symbol, except for the last SL PRS resource within a slot which may be assumed to always have a gap symbol. In other example embodiments, the UE may indicate in a bit per SL PRS resource whether that resource includes a gap symbol at the end. In further example embodiments, the anchor UE 200 may also include the starting symbol of each SL PRS resource in the SCI. For example, a SL PRS resource including a gap symbol may imply that a symbol before or after the transmission of SL PRS is the gap symbol, or it may imply that the first symbol or the last symbol of the SL PRS resource is the gap symbol.

At 225, the target UE 205 (or receiving UE(s)) may decode the SCI, and determine a time domain allocation of each SL PRS resource (i.e., if SL PRS resource includes a gap symbol). In certain example embodiments, the receiving UEs (or target UE 205) may determine if each SL PRS resource is receivable depending on a starting location, and if the receiving UE 200 will have any Rx automatic gain control (AGC) issues. For instance, an AGC issue may arise when, based on the starting location of the SL PRS, the receiving UE will not have performed AGC when the transmitting UE is active. Thus, the AGC calculation will be wrong. At 230, the target UE 205 (or receiving UE) may transmit a message to the anchor UE 200 indicating an acceptance or rejection of usage of the gap symbol as the SL PRS resource (e.g., for reserved resource). For example, the target UE 205 may indicate an acceptance of the gap symbol when the target UE 205 desires to perform Rx-Tx switching in the same slot as the SL PRS. On the other hand, the target UE 205 may reject absence of the gap symbol when the target UE 205 does desire to perform Rx-Tx switching in the same slot as the SL PRS. In certain example embodiments, the message transmitted from the target UE 205 to the anchor UE 200 may be sent in an SCI, hybrid automatic repeat request-like (HARQ-fike) feedback, or higher layer message (e.g., radio resource control (RRC)).

At 235, the anchor UE 200 may transmit SL PRS resources to the target UE 205 with or without gap symbols according to the transmitted SCI. In some example embodiments, the network may (pre-)configure the anchor UE 200 whether this type of dynamic SL PRS gap symbol is allowed in a given resource pool. At 240, the target UE 205 may receive, from the anchor UE 200, SL PRS in SL PRS resource(s) which may include(s) the gap symbol. In certain example embodiments, the target UE 205 may use the received SL PRS to compute its location.

In other example embodiments, feedback to the anchor UE 200 may be provided by the target UE 205 regarding the indication on whether the SL PRS resource is followed by a gap symbol (i.e., gap symbol is before or after the SL PRS resource). For instance, if the indication does not include the gap symbol, the target UE 205 may respond with an acceptance or rejection of the indication. The target UE 205 may also indicate a need or desire for the gap symbol with the response. In response to the target UE 205, the anchor UE 200 may transmit the SL PRS resource with or without the gap symbol based on the target UE's 205 response.

According to certain example embodiments, the network (e.g., gNB or location management function (LMF)) may provide a (pre-)configuration to the UEs (e.g., anchor UEs and/or target UEs) indicating the (usage of) gap symbol(s) before and/or after the SL PRS resources. For instance, in certain example embodiments, the network may indicate to the UEs (e.g., anchor UEs and/or target UEs) whether the UEs are allowed to use and indicate a gap symbol in any resource (e.g., in addition to the one that the network has (pre-)configured (a default setting)).

According to other example embodiments, the network may indicate that the UEs (e.g., anchor UEs and/or target UEs) should use and indicate a gap symbol if they transmit SL PRS with a certain number (i.e., range) of resources (e.g., symbols), or the number being smaller/larger than a threshold value (pre-)configured by the network.

According to further example embodiments, the network may associate such configuration (i.e., the (pre-)configuration to the UEs) with a certain resource pool or pools, or a certain type(s) of pool. For instance, the type of pool may include a dedicated resource pool for SL PRS transmissions and/or a shared pool between SL PRS and SL communication transmissions.

According to certain example embodiments, the network may further associate the gap symbol configuration with the use of certain SL positioning methods including, for example, sidelink time of arrival, sidelink time difference of arrival (SL-TDOA) and/or SL-RTT.

In certain example embodiments, a server UE (i.e., a third UE in addition to the anchor UE and target UE) may configure an anchor UE on whether the gap symbol is used as the SL PRS resource. In some example embodiments, the server UE may be aware (or in control) of the transmission and reception status of anchor and target UEs involved in a SL positioning session. Thus, the server UE may be able to configure the usage of the gap symbol by the anchor and target UEs to increase channel utilization. In other example embodiments, UEs that transmit or receive SL PRS in a gap symbol, or assist another UE in transmitting or receiving SL PRS in a gap symbol (by means of, for example, inter UE coordination (IUC)) may also perform sensing in gap symbols when possible.

According to certain example embodiments, the anchor UE may dynamically indicate the target UE to consider the first or the last symbol of a SL PRS resource as a gap symbol. According to certain example embodiments, the dynamic indication may involve the anchor UE telling a UE in the SCI of the first or the last symbols of the SL PRS resource can be a gap symbol. The SCI may be sent prior to each SL PRS resource reservation. Thus, for one SL PRS occasion, it may indicate the first or the last symbols can be a gap, and then for a future SL PRs occasion, it may indicate that the first or last symbols cannot be a gap. The default behavior of the target UE may to perform measurement(s) across all the symbols of the SL PRS. For example, if a periodic SL PRS resource is configured with 2-symbol and Comb-2, the target UE may obtain the positioning measurement from the two symbols by default. If the target UE is indicated by SCI to consider the last symbol as a gap symbol at a certain SL PRS transmission occasion, the target UE may obtain positioning measurement(s) from one symbol.

In certain example embodiments, the anchor UE may dynamically indicate (similar to the example embodiment described above) the target UE to consider a sub-symbol as a "gap time". For example, if a periodic SL PRS resource is configured with 1-symbol and comb-2, the target UE may perform the positioning measurement from this SL PRS resource. If an anchor UE indicates this SL PRS resource as a gap symbol, the target UE may consider this SL PRS as muted. However, if the anchor UE indicates this SL PRS resource as a "sub-symbol level gap symbol," the target UE may assume that the anchor UE will transmit this SL PRS resource although this SL PRS resource is indicated as a gap symbol. Additionally, the target UE may obtain the first half symbol of this SL PRS resource since the time-domain signal is repeated two times in this symbol.

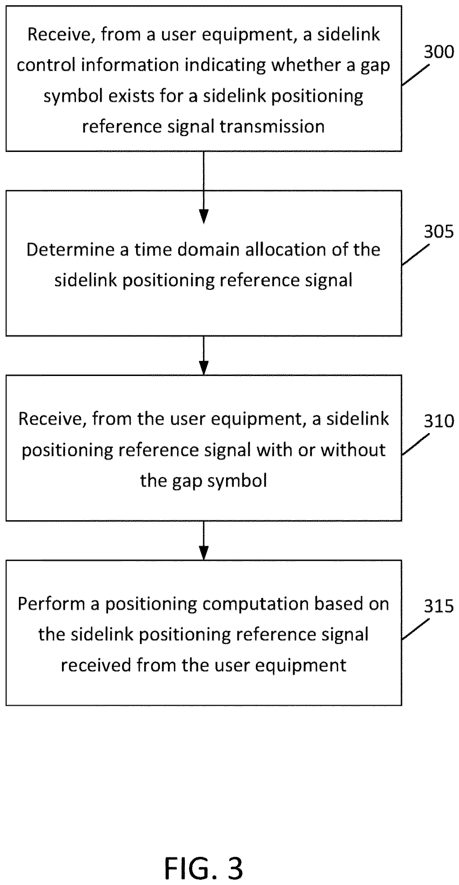

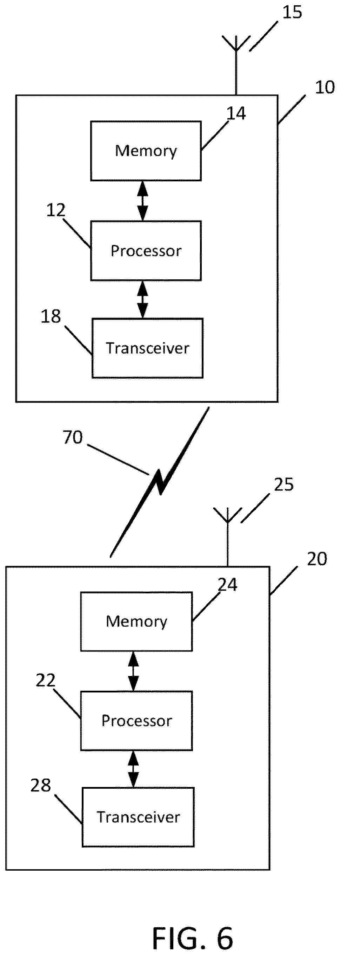

FIG. 3 illustrates an example flow diagram of a method, according to certain example embodiments. In an example embodiment, the method of FIG. 3 may be performed by a network entity, or a group of multiple network elements in a 3GPP system, such as LTE or 5G-NR. For instance, in an example embodiment, the method of FIG. 3 may be performed by a UE such as a target UE similar to one of apparatuses 10 or 20 illustrated in FIG. 6.

According to certain example embodiments, the method of FIG. 3 may include, at 300, receiving, from a user equipment, a sidelink control information indicating whether a gap symbol exists for a sidelink positioning reference signal transmission. The method may also include, at 305, determining a time domain allocation of the sidelink positioning reference signal. The method may further include, at 310, receiving, from the user equipment, a sidelink positioning reference signal with or without the gap symbol. In addition, the method may include, at 315, performing a positioning computation based on the sidelink positioning reference signal received from the user equipment, in some example embodiments, the positioning computation may at least includes performing positioning measurement or estimating the location of a target UE.

According to certain example embodiments, transmission of the sidelink positioning reference signal uses a sidelink positioning reference signal resource that comprises at least a set of symbols or resource blocks. According to some example embodiments, when the gap symbol exists, the gap symbol may come before the sidelink positioning reference signal resource, or the gap symbol may follow the sidelink positioning reference signal resource. According to other example embodiments, the method may also include indicating to the user equipment whether the user equipment requested to use the gap symbol for a sidelink positioning reference signal transmission. According to further example embodiments, the method may also include indicating to the user equipment an acceptance or a rejection of the existence of the gap symbol as the sidelink positioning reference signal resource.

In certain example embodiments, whether the sidelink positioning reference signal resource includes the gap symbol is indicated in a single bit, or whether the sidelink positioning reference signal resource includes the gap symbol is indicated in a bit per one or more sidelink positioning reference signal resources. In some example embodiments, the method may further include determining whether the sidelink positioning reference signal resource is receivable depending on a starting symbol location. In other example embodiments, the method may also include determining whether the user equipment will have a reception automatic gain control issue. In further example embodiments, the method may further include providing, to the user equipment, a list of sidelink positioning reference resources, and associated gap symbols for a sidelink positioning reference signal transmission. In other example embodiments, the method may further include receiving a configuration from a network element to enable or disable the request of the gap symbol from the user equipment.

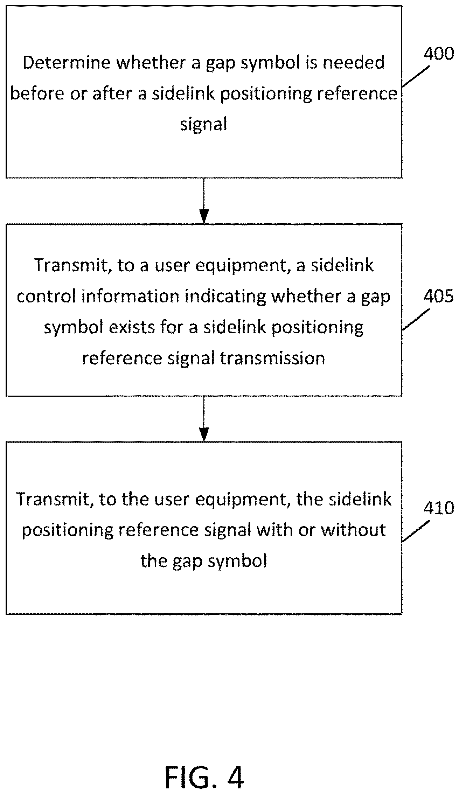

FIG. 4 illustrates an example flow diagram of a method, according to certain example embodiments. In an example embodiment, the method of FIG. 4 may be performed by a network entity, or a group of multiple network elements in a 3GPP system, such as LTE or 5G-NR. For instance, in an example embodiment, the method of FIG. 4 may be performed by a UE such as an anchor UE similar to one of apparatuses 10 or 20 illustrated in FIG. 6.

According to certain example embodiments, the method of FIG. 4 may include, at 400, determining whether a gap symbol is needed before or after a sidelink positioning reference signal. The method may also include, at 405, transmitting, to a user equipment, a sidelink control information indicating whether a gap symbol exists for a sidelink positioning reference signal transmission. The method may further include, at 410, transmitting, to the user equipment, the sidelink positioning reference signal with or without the gap symbol.

According to certain example embodiments, transmission of the sidelink positioning reference signal may use a sidelink positioning reference signal resource that comprises at least a set of symbols and resource blocks. According to some example embodiments, when the gap symbol exists, the gap symbol may come before the sidelink positioning reference signal resource, or the gap symbol may follow the sidelink positioning reference signal resource. According to other example embodiments, the method may also include receiving, from the user equipment, an indication of whether the gap symbol is requested to be used for the sidelink positioning reference signal transmission. According to further example embodiments, the method may further include receiving, from the user equipment, an acceptance or rejection of the existence of the gap symbol as the sidelink positioning reference signal resource.

In certain example embodiments, whether the sidelink positioning reference signal resource may include the gap symbol is indicated in a single bit, or whether the sidelink positioning reference signal resource may include the gap symbol is indicated in a bit per one or more sidelink positioning reference signal resources. In some example embodiments, the method may also include receiving a configuration from a network on whether a gap symbol indication in the sidelink control information is allowed in a resource pool or not. In further example embodiments, the method may also include receiving, from the user equipment, a list of sidelink positioning reference resources, and associated gap symbols that can be used for a sidelink positioning reference signal transmission. In certain example embodiments, the method may further include determining a starting symbol for the sidelink positioning reference signal resource, and indicating the starting symbol in the sidelink control information.

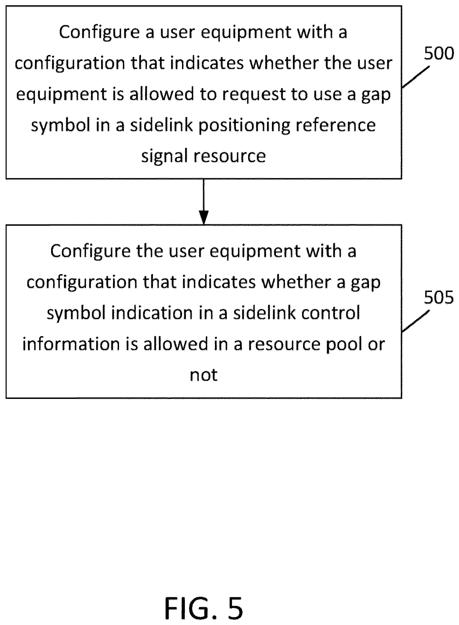

FIG. 5 illustrates an example flow diagram of another method, according to certain example embodiments. In an example embodiment, the method of FIG. 5 may be performed by a network or network entity, or a group of multiple network elements in a 3GPP system, such as LTE or 5G-NR. For instance, in an example embodiment, the method of FIG. 5 may be performed by a gNB similar to one of apparatuses 10 or 20 illustrated in FIG. 6.

According to certain example embodiments, the method of FIG. 5 may include, at 500, configuring a user equipment with a configuration that indicates whether the user equipment is allowed to request to use a gap symbol in a sidelink positioning reference signal resource. The method may also include, at 505, configuring the user equipment with a configuration that indicates whether a gap symbol indication in a sidelink control information is allowed in a resource pool or not.

According to certain example embodiments, the user equipment may be an anchor user equipment or a target user equipment. According to some example embodiments, the method may also include associating the configuration with at least one resource pool. According to other example embodiments, the at least one resource pool may include a dedicated resource pool for sidelink positioning reference signal transmissions, or a shared pool between a sidelink positioning reference signal and sidelink communication transmissions. According to further example embodiments, the method may further include associating the configuration with use of a sidelink positioning method. In certain example embodiments, the sidelink positioning method may include a sidelink time difference of arrival, a sidelink time of arrival, a sidelink angle of arrival, or a sidelink round trip time.

FIG. 6 illustrates a set of apparatuses 10 and 20 according to certain example embodiments. In certain example embodiments, the apparatus 10 may be an element in a communications network or associated with such a network, such as a UE (e.g., anchor UE, target UE, receiving UE, etc.), mobile equipment (ME), mobile station, mobile device, stationary device, IoT device, or other device.

In some example embodiments, apparatus 10 may include one or more processors, one or more computer-readable storage medium (for example, memory, storage, or the like), one or more radio access components (for example, a modem, a transceiver, or the like), and/or a user interface. In some example embodiments, apparatus 10 may be configured to operate using one or more radio access technologies, such as GSM, LTE, LTE-A, NR, 5G, WLAN, WiFi, NB-IoT, Bluetooth, NFC, MulteFire, and/or any other radio access technologies. It should be noted that one of ordinary skill in the art would understand that apparatus 10 may include components or features not shown in FIG. 6.

As illustrated in the example of FIG. 6, apparatus 10 may include or be coupled to a processor 12 for processing information and executing instructions or operations. Processor 12 may be any type of general or specific purpose processor. In fact, processor 12 may include one or more of general-purpose computers, special purpose computers, microprocessors, digital signal processors (DSPs), field-programmable gate arrays (FPGAs), application-specific integrated circuits (ASICs), and processors based on a multi-core processor architecture, as examples. While a single processor 12 is shown in FIG. 6, multiple processors may be utilized according to other example embodiments. For example, it should be understood that, in certain example embodiments, apparatus 10 may include two or more processors that may form a multiprocessor system (e.g., in this case processor 12 may represent a multiprocessor) that may support multiprocessing. According to certain example embodiments, the multiprocessor system may be tightly coupled or loosely coupled (e.g., to form a computer cluster).

Processor 12 may perform functions associated with the operation of apparatus 10 including, as some examples, precoding of antenna gain/phase parameters, encoding and decoding of individual bits forming a communication message, formatting of information, and overall control of the apparatus 10, including processes and examples illustrated in FIGs. 1-4.

Apparatus 10 may further include or be coupled to a memory 14 (internal or external), which may be coupled to processor 12, for storing information and instructions that may be executed by processor 12. Memory 14 may be one or more memories and of any type suitable to the local application environment, and may be implemented using any suitable volatile or nonvolatile data storage technology such as a semiconductor-based memory device, a magnetic memory device and system, an optical memory device and system, fixed memory, and/or removable memory. For example, memory 14 can be comprised of any combination of random access memory (RAM), read only memory (ROM), static storage such as a magnetic or optical disk, hard disk drive (HDD), or any other type of non-transitory machine or computer readable media. The instructions stored in memory 14 may include program instructions or computer program code that, when executed by processor 12, enable the apparatus 10 to perform tasks as described herein.

In certain example embodiments, apparatus 10 may further include or be coupled to (internal or external) a drive or port that is configured to accept and read an external computer readable storage medium, such as an optical disc, USB drive, flash drive, or any other storage medium. For example, the external computer readable storage medium may store a computer program or software for execution by processor 12 and/or apparatus 10 to perform any of the methods and examples illustrated in FIGs. 1-4.

In some example embodiments, apparatus 10 may also include or be coupled to one or more antennas 15 for receiving a downlink signal and for transmitting via an UL from apparatus 10. Apparatus 10 may further include a transceiver 18 configured to transmit and receive information. The transceiver 18 may also include a radio interface (e.g., a modem) coupled to the antenna 15. The radio interface may correspond to a plurality of radio access technologies including one or more of GSM, LTE, LTE-A, 5G, NR, WLAN, NB-IoT, Bluetooth, BT-LE, NFC, RFID, UWB, and the like. The radio interface may include other components, such as filters, converters (for example, digital-to-analog converters and the like), symbol demappers, signal shaping components, an Inverse Fast Fourier Transform (IFFT) module, and the like, to process symbols, such as OFDMA symbols, carried by a downlink or an UL.

For instance, transceiver 18 may be configured to modulate information on to a carrier waveform for transmission by the antenna(s) 15 and demodulate information received via the antenna(s) 15 for further processing by other elements of apparatus 10. In other example embodiments, transceiver 18 may be capable of transmitting and receiving signals or data directly. Additionally or alternatively, in some example embodiments, apparatus 10 may include an input and/or output device (I/O device). In certain example embodiments, apparatus 10 may further include a user interface, such as a graphical user interface or touchscreen.

In certain example embodiments, memory 14 stores software modules that provide functionality when executed by processor 12. The modules may include, for example, an operating system that provides operating system functionality for apparatus 10. The memory may also store one or more functional modules, such as an application or program, to provide additional functionality for apparatus 10. The components of apparatus 10 may be implemented in hardware, or as any suitable combination of hardware and software. According to certain example embodiments, apparatus 10 may optionally be configured to communicate with apparatus 20 via a wireless or wired communications link 70 according to any radio access technology, such as NR.

According to certain example embodiments, processor 12 and memory 14 may be included in or may form a part of processing circuitry or control circuitry. In addition, in some example embodiments, transceiver 18 may be included in or may form a part of transceiving circuitry.

For instance, in certain example embodiments, apparatus 10 may be controlled by memory 14 and processor 12 to receive, from a user equipment, a sidelink control information indicating whether a gap symbol exists for a sidelink positioning reference signal transmission. Apparatus 10 may also be controlled by memory 14 and processor 12 to determine a time domain allocation of the sidelink positioning reference signal. Apparatus 10 may further be controlled by memory 14 and processor 12 to receive, from the user equipment, a sidelink positioning reference signal with or without the gap symbol. In addition, apparatus 10 may be controlled by memory 14 and processor 12 to perform a positioning computation based on the sidelink positioning reference signal received from the user equipment.

In other example embodiments, apparatus 10 may be controlled by memory 14 and processor 12 to determine whether a gap symbol is needed before or after a sidelink positioning reference signal. Apparatus 10 may also be controlled by memory 14 and processor 12 to transmit, to a user equipment, a sidelink control information indicating whether a gap symbol exists for a sidelink positioning reference signal transmission. Apparatus 10 may further be controlled by memory 14 and processor 12 to transmit, to the user equipment, the sidelink positioning reference signal with or without the gap symbol.

As illustrated in the example of FIG. 6, apparatus 20 may be a network, core network element, or element in a communications network or associated with such a network, such as a gNB, BS, cell, or NW.

As illustrated in the example of FIG. 6, apparatus 20 may include a processor 22 for processing information and executing instructions or operations. Processor 22 may be any type of general or specific purpose processor. For example, processor 22 may include one or more of general-purpose computers, special purpose computers, microprocessors, digital signal processors (DSPs), field-programmable gate arrays (FPGAs), application-specific integrated circuits (ASICs), and processors based on a multi-core processor architecture, as examples. While a single processor 22 is shown in FIG. 6, multiple processors may be utilized according to other example embodiments. For example, it should be understood that, in certain example embodiments, apparatus 20 may include two or more processors that may form a multiprocessor system (e.g., in this case processor 22 may represent a multiprocessor) that may support multiprocessing. In certain example embodiments, the multiprocessor system may be tightly coupled or loosely coupled (e.g., to form a computer cluster).

According to certain example embodiments, processor 22 may perform functions associated with the operation of apparatus 20, which may include, for example, precoding of antenna gain/phase parameters, encoding and decoding of individual bits forming a communication message, formatting of information, and overall control of the apparatus 20, including processes and examples illustrated in FIGs. 1, 2, 4, and 5.

Apparatus 20 may further include or be coupled to a memory 24 (internal or external), which may be coupled to processor 22, for storing information and instructions that may be executed by processor 22. Memory 24 may be one or more memories and of any type suitable to the local application environment, and may be implemented using any suitable volatile or nonvolatile data storage technology such as a semiconductor-based memory device, a magnetic memory device and system, an optical memory device and system, fixed memory, and/or removable memory. For example, memory 24 can be comprised of any combination of random access memory (RAM), read only memory (ROM), static storage such as a magnetic or optical disk, hard disk drive (HDD), or any other type of non-transitory machine or computer readable media. The instructions stored in memory 24 may include program instructions or computer program code that, when executed by processor 22, enable the apparatus 20 to perform tasks as described herein.

In certain example embodiments, apparatus 20 may further include or be coupled to (internal or external) a drive or port that is configured to accept and read an external computer readable storage medium, such as an optical disc, USB drive, flash drive, or any other storage medium. For example, the external computer readable storage medium may store a computer program or software for execution by processor 22 and/or apparatus 20 to perform the methods and examples illustrated in FIGs. 1, 2, 4, and 5.

In certain example embodiments, apparatus 20 may also include or be coupled to one or more antennas 25 for transmitting and receiving signals and/or data to and from apparatus 20. Apparatus 20 may further include or be coupled to a transceiver 28 configured to transmit and receive information. The transceiver 28 may include, for example, a plurality of radio interfaces that may be coupled to the antenna(s) 25. The radio interfaces may correspond to a plurality of radio access technologies including one or more of GSM, NB-IoT, LTE, 5G, WLAN, Bluetooth, BT-LE, NFC, radio frequency identifier (RFID), ultrawideband (UWB), MulteFire, and the like. The radio interface may include components, such as filters, converters (for example, digital-to-analog converters and the like), mappers, a Fast Fourier Transform (FFT) module, and the like, to generate symbols for a transmission via one or more downlinks and to receive symbols (for example, via an UL).

As such, transceiver 28 may be configured to modulate information on to a carrier waveform for transmission by the antenna(s) 25 and demodulate information received via the antenna(s) 25 for further processing by other elements of apparatus 20. In other example embodiments, transceiver 18 may be capable of transmitting and receiving signals or data directly. Additionally or alternatively, in some example embodiments, apparatus 20 may include an input and/or output device (I/O device).

In certain example embodiment, memory 24 may store software modules that provide functionality when executed by processor 22. The modules may include, for example, an operating system that provides operating system functionality for apparatus 20. The memory may also store one or more functional modules, such as an application or program, to provide additional functionality for apparatus 20. The components of apparatus 20 may be implemented in hardware, or as any suitable combination of hardware and software.

According to some example embodiments, processor 22 and memory 24 may be included in or may form a part of processing circuitry or control circuitry. In addition, in some example embodiments, transceiver 28 may be included in or may form a part of transceiving circuitry.

As used herein, the term "circuitry" may refer to hardware-only circuitry implementations (e.g., analog and/or digital circuitry), combinations of hardware circuits and software, combinations of analog and/or digital hardware circuits with software/firmware, any portions of hardware processor(s) with software (including digital signal processors) that work together to cause an apparatus (e.g., apparatus 10 and 20) to perform various functions, and/or hardware circuit(s) and/or processor(s), or portions thereof, that use software for operation but where the software may not be present when it is not needed for operation. As a further example, as used herein, the term "circuitry" may also cover an implementation of merely a hardware circuit or processor (or multiple processors), or portion of a hardware circuit or processor, and its accompanying software and/or firmware. The term circuitry may also cover, for example, a baseband integrated circuit in a server, cellular network node or device, or other computing or network device.

For instance, in certain example embodiments, apparatus 20 may be controlled by memory 24 and processor 22 to configure a user equipment with a configuration that indicates usage of a gap symbol before or after a sidelink positioning reference signal resource. Apparatus 20 may also be controlled by memory 24 and processor 22 to indicate whether a user equipment is allowed to use and indicate the gap symbol in the sidelink positioning reference signal resource.

In some example embodiments, an apparatus (e.g., apparatus 10 and/or apparatus 20) may include means for performing a method, a process, or any of the variants discussed herein. Examples of the means may include one or more processors, memory, controllers, transmitters, receivers, and/or computer program code for causing the performance of the operations.

Certain example embodiments may be directed to an apparatus that includes means for performing any of the methods described herein including, for example, means for receiving, from a user equipment, a sidelink control information indicating whether a gap symbol exists for a sidelink positioning reference signal transmission. The apparatus may also include means for determining a time domain allocation of the sidelink positioning reference signal. The apparatus may further include means for receiving, from the user equipment, a sidelink positioning reference signal with or without the gap symbol. In addition, the apparatus may include means for performing a positioning computation based on the sidelink positioning reference signal received from the user equipment.

Additional example embodiments may be directed to an apparatus that includes means for performing any of the methods described herein including, for example, means for determining whether a gap symbol is needed before or after a sidelink positioning reference signal. The apparatus may also include means for transmitting, to a user equipment, a sidelink control information indicating whether a gap symbol exists for a sidelink positioning reference signal transmission. The apparatus may further include means for transmitting, to the user equipment, the sidelink positioning reference signal with or without the gap symbol.

Further example embodiments may be directed to an apparatus that includes means for performing any of the methods described herein including, for example, means for configuring a user equipment with a configuration that indicates whether the user equipment is allowed to request to use a gap symbol in a sidelink positioning reference signal resource. The apparatus may also include means for configuring the user equipment with a configuration that indicates whether a gap symbol indication in a sidelink control information is allowed in a resource pool or not.

Certain example embodiments described herein provide several technical improvements, enhancements, and /or advantages. For instance, in some example embodiments, it may be possible to address the problem of how to efficiently allocate the SL PRS resource and associated gap symbols. It may also be possible to achieve higher SL PRS resource efficiency.

A computer program product may include one or more computer-executable components which, when the program is run, are configured to carry out some example embodiments. The one or more computer-executable components may be at least one software code or portions of it. Modifications and configurations required for implementing functionality of certain example embodiments may be performed as routine(s), which may be implemented as added or updated software routine(s). Software routine(s) may be downloaded into the apparatus.

As an example, software or a computer program code or portions of it may be in a source code form, object code form, or in some intermediate form, and it may be stored in some sort of carrier, distribution medium, or computer readable medium, which may be any entity or device capable of carrying the program. Such carriers may include a record medium, computer memory, read-only memory, photoelectrical and/or electrical carrier signal, telecommunications signal, and software distribution package, for example. Depending on the processing power needed, the computer program may be executed in a single electronic digital computer or it may be distributed amongst a number of computers. The computer readable medium or computer readable storage medium may be a non-transitory medium.

In other example embodiments, the functionality may be performed by hardware or circuitry included in an apparatus (e.g., apparatus 10 or apparatus 20), for example through the use of an application specific integrated circuit (ASIC), a programmable gate array (PGA), a field programmable gate array (FPGA), or any other combination of hardware and software. In yet another example embodiment, the functionality may be implemented as a signal, a non-tangible means that can be carried by an electromagnetic signal downloaded from the Internet or other network.

According to certain example embodiments, an apparatus, such as a node, device, or a corresponding component, may be configured as circuitry, a computer or a microprocessor, such as single-chip computer element, or as a chipset, including at least a memory for providing storage capacity used for arithmetic operation and an operation processor for executing the arithmetic operation.

One having ordinary skill in the art will readily understand that the disclosure as discussed above may be practiced with procedures in a different order, and/or with hardware elements in configurations which are different than those which are disclosed. Therefore, although the disclosure has been described based upon these example embodiments, it would be apparent to those of skill in the art that certain modifications, variations, and alternative constructions would be apparent, while remaining within the spirit and scope of example embodiments. Although the above embodiments refer to 5G NR and LTE technology, the above embodiments may also apply to any other present or future 3GPP technology, such as LTE-advanced, and/or fourth generation (4G) technology.

### Partial Glossary:

- 3GPP: 3rd Generation Partnership Project
- 5G: 5th Generation
- 5GCN: 5G Core Network
- 5GS: 5G System
- AGC: Automatic Gain Control
- BS: Base Station
- DL: Downlink
- eNB: Enhanced Node B
- E-UTRAN: Evolved UTRAN
- gNB: 5G or Next Generation NodeB
- HARQ: Hybrid Automatic Repeat Request
- IUC: Inter UE Coordination
- LMF: Location Management Function
- LP-SS: Low Power Synchronization Signal
- LR: Low-Power Radio
- LTE: Long Term Evolution
- NR: New Radio
- NW: Network
- PRS: Positioning Reference Signal
- PSCCH: Physical Sidelink Control Channel
- RRC: Radio Resource Control
- RSRP: Refence Signal Received Power
- RTT: Round Trip Time
- SCI: Sidelink Control Information
- SL: Sidelink
- TDM: Time Division Multiplexing
- TDOA: Time Difference of Arrival
- UE: User Equipment
- UL: Uplink

Further aspects and example embodiments are set out in the following numbered paragraphs.
1. A method, comprising:
   receiving, from a user equipment, a sidelink control information indicating whether a gap symbol exists for a sidelink positioning reference signal transmission;
   determining a time domain allocation of the sidelink positioning reference signal;
   receiving, from the user equipment, a sidelink positioning reference signal with or without the gap symbol; and
   performing a positioning computation based on the sidelink positioning reference signal received from the user equipment.
2. The method according to paragraph 1, wherein transmission of the sidelink positioning reference signal uses a sidelink positioning reference signal resource that comprises at least a set of symbols or resource blocks.
3. The method according to paragraph 2, wherein when the gap symbol exists, the gap symbol comes before the sidelink positioning reference signal resource, or the gap symbol follows the sidelink positioning reference signal resource.
4. The method according to any of paragraphs 1-3, further comprising:
   indicating to the user equipment whether the user equipment requested to use the gap symbol for a sidelink positioning reference signal transmission.
5. The method according to any of paragraphs 1-4, further comprising:
   indicating to the user equipment an acceptance or a rejection of the existence of the gap symbol as the sidelink positioning reference signal resource.
6. The method according to any of paragraphs 1-5,
   wherein whether the sidelink positioning reference signal resource comprises the gap symbol is indicated in a single bit, or
   wherein whether the sidelink positioning reference signal resource comprises the gap symbol is indicated in a bit per one or more sidelink positioning reference signal resources.
7. The method according to any of paragraphs 1-6, further comprising:
   determining whether the sidelink positioning reference signal resource is receivable depending on a starting symbol location; and
   determining whether the user equipment will have a reception automatic gain control issue.
8. The method according to any of paragraphs 1-7, further comprising:
   providing, to the user equipment, a list of sidelink positioning reference resources, and associated gap symbols for a sidelink positioning reference signal transmission.
9. The method according to any of paragraphs 1-8, further comprising:
   receiving a configuration from a network element to enable or disable the request of the gap symbol from the user equipment.
10. A method, comprising:
   determining whether a gap symbol is needed before or after a sidelink positioning reference signal;
   transmitting, to a user equipment, a sidelink control information indicating whether a gap symbol exists for a sidelink positioning reference signal transmission; and
   transmitting, to the user equipment, the sidelink positioning reference signal with or without the gap symbol.
11. The method according to paragraph 10, wherein transmission of the sidelink positioning reference signal uses a sidelink positioning reference signal resource that comprises at least a set of symbols and resource blocks.
12. The method according to paragraph 11, wherein when the gap symbol exists, the gap symbol comes before the sidelink positioning reference signal resource, or the gap symbol follows the sidelink positioning reference signal resource.
13. The method according to any of paragraphs 10-12, further comprising:
   receiving, from the user equipment, an indication of whether the gap symbol is requested to be used for the sidelink positioning reference signal transmission.
14. The method according to any of paragraphs 10-13, further comprising:
   receiving, from the user equipment, an acceptance or rejection of the existence of the gap symbol as the sidelink positioning reference signal resource.
15. The method according to any of paragraphs 10-14,
   wherein whether the sidelink positioning reference signal resource comprises the gap symbol is indicated in a single bit, or
   wherein whether the sidelink positioning reference signal resource comprises the gap symbol is indicated in a bit per one or more sidelink positioning reference signal resources.
16. The method according to any of paragraphs 10-15, further comprising:
   receiving a configuration from a network on whether a gap symbol indication in the sidelink control information is allowed in a resource pool or not.
17. The method according to any of paragraphs 10-16, further comprising:
   receiving, from the user equipment, a list of sidelink positioning reference resources, and associated gap symbols that can be used for a sidelink positioning reference signal transmission.
18. The method according to any of paragraphs 10-17, further comprising:
   determining a starting symbol for the sidelink positioning reference signal resource; and indicating the starting symbol in the sidelink control information.
19. A method, comprising:
   configuring a user equipment with a configuration that indicates whether the user equipment is allowed to request to use a gap symbol in a sidelink positioning reference signal resource; and configuring the user equipment with a configuration that indicates whether a gap symbol indication in a sidelink control information is allowed in a resource pool or not.
20. The method according to paragraph 19, wherein the user equipment is an anchor user equipment or a target user equipment.
21. The method according to paragraphs 19 or 20, further comprising:
   associating the configuration with at least one resource pool.
22. The method according to paragraph 21, wherein the at least one resource pool comprises a dedicated resource pool for sidelink positioning reference signal transmissions, or a shared pool between a sidelink positioning reference signal and sidelink communication transmissions.
23. The method according to any of paragraphs 19-22, further comprising:
   associating the configuration with use of a sidelink positioning method.
24. The method according to paragraph 23, wherein the sidelink positioning method comprises a sidelink time difference of arrival, a sidelink time of arrival, a sidelink angle of arrival, or a sidelink round trip time.
25. An apparatus, comprising:
   at least one processor; and
   at least one memory comprising computer program code,
   the at least one memory and the computer program code configured to, with storing instructions that, when executed by the at least one processor, cause the apparatus at least to:
      receive, from a user equipment, a sidelink control information indicating whether a gap symbol exists for a sidelink positioning reference signal transmission;
   determine a time domain allocation of the sidelink positioning reference signal;
   receive, from the user equipment, a sidelink positioning reference signal with or without the gap symbol; and
   perform a positioning computation based on the sidelink positioning reference signal received from the user equipment.
26. The apparatus according to paragraph 25, wherein transmission of the sidelink positioning reference signal uses a sidelink positioning reference signal resource that comprises at least a set of symbols or resource blocks.
27. The apparatus according to paragraph 26, wherein when the gap symbol exists, the gap symbol comes before the sidelink positioning reference signal resource, or the gap symbol follows the sidelink positioning reference signal resource.
28. The apparatus according to any of paragraphs 25-27, wherein the apparatus is further caused to:
   indicate to the user equipment whether the user equipment requested to use the gap symbol for a sidelink positioning reference signal transmission.
29. The apparatus according to any of paragraphs 25-28, wherein the apparatus is further configured to:
   indicate to the user equipment an acceptance or a rejection of the existence of the gap symbol as the sidelink positioning reference signal resource.
30. The apparatus according to any of paragraphs 25-29,
   wherein whether the sidelink positioning reference signal resource comprises the gap symbol is indicated in a single bit, or
   wherein whether the sidelink positioning reference signal resource comprises the gap symbol is indicated in a bit per one or more sidelink positioning reference signal resources.
31. The apparatus according to any of paragraphs 25-30, wherein the apparatus is further caused to:
   determine whether the sidelink positioning reference signal resource is receivable depending on a starting symbol location; and
   determine whether the user equipment will have a reception automatic gain control issue.
32. An apparatus, comprising:
   at least one processor; and
   at least one memory comprising computer program code,
   the at least one memory and the computer program code configured to, with storing instructions that, when executed by the at least one processor, cause the apparatus at least to:
      determine whether a gap symbol is needed before or after a sidelink positioning reference signal;
   transmit, to a user equipment, a sidelink control information indicating whether a gap symbol exists for a sidelink positioning reference signal transmission; and
   transmit, to the user equipment, the sidelink positioning reference signal with or without the gap symbol.
33. The apparatus according to paragraph 32, wherein transmission of the sidelink positioning reference signal uses a sidelink positioning reference signal resource that comprises at least a set of symbols and resource blocks.
34. The apparatus according to paragraph 33, wherein when the gap symbol exists, the gap symbol comes before the sidelink positioning reference signal resource, or the gap symbol follows the sidelink positioning reference signal resource.
35. The apparatus according to any of paragraphs 32-34, wherein the apparatus is further caused to:
   receive, from the user equipment, an indication of whether the gap symbol is requested to be used for the sidelink positioning reference signal transmission.
36. The apparatus according to any of paragraphs 32-35, wherein the apparatus is further caused to:
   receive, from the user equipment, an acceptance or rejection of the existence of the gap symbol as the sidelink positioning reference signal resource.
37. The apparatus according to any of paragraphs 32-36,
   wherein whether the sidelink positioning reference signal resource comprises the gap symbol is indicated in a single bit, or
   wherein whether the sidelink positioning reference signal resource comprises the gap symbol is indicated in a bit per one or more sidelink positioning reference signal resources.
38. The apparatus according to any of paragraphs 32-37, wherein the apparatus is further caused to:
   receive a configuration from a network on whether a gap symbol indication in the sidelink control information is allowed in a resource pool or not.
39. The apparatus according to any of paragraphs 32-38, wherein the apparatus is further caused to:
   receive, from the user equipment, a list of sidelink positioning reference resources, and associated gap symbols that can be used for a sidelink positioning reference signal transmission.
40. The apparatus according to any of paragraphs 32-39, wherein the apparatus is further caused to:
   determine a starting symbol for the sidelink positioning reference signal resource; and indicate the starting symbol in the sidelink control information.
41. An apparatus, comprising:
   at least one processor; and
   at least one memory comprising computer program code,
   the at least one memory and the computer program code configured to, with storing instructions that, when executed by the at least one processor, cause the apparatus at least to:
      configure a user equipment with a configuration that indicates whether the user equipment is allowed to request to use a gap symbol in a sidelink positioning reference signal resource; and
      configure the user equipment with a configuration that indicates whether a gap symbol indication in a sidelink control information is allowed in a resource pool or not.
42. The apparatus according to paragraph 41, wherein the user equipment is an anchor user equipment or a target user equipment.
43. The apparatus according to paragraphs 41 or 42, wherein the apparatus is further configured to:
   associate the configuration with at least one resource pool.
44. The apparatus according to paragraph 43, wherein the at least one resource pool comprises a dedicated resource pool for sidelink positioning reference signal transmissions, or a shared pool between a sidelink positioning reference signal and sidelink communication transmissions.
45. The apparatus according to any of paragraphs 41-44, wherein the apparatus is further configured to:
   associate the configuration with use of a sidelink positioning method.
46. The apparatus according to paragraph 45, wherein the sidelink positioning method comprises a sidelink time difference of arrival, sidelink time of arrest, a sidelink angle of arrival, or a sidelink group trip time.
47. An apparatus, comprising:
   means for receiving, from a user equipment, a sidelink control information indicating whether a gap symbol exists for a sidelink positioning reference signal transmission;
   means for determining a time domain allocation of the sidelink positioning reference signal;
   means for receiving, from the user equipment, a sidelink positioning reference signal with or without the gap symbol; and
   means for performing a positioning computation based on the sidelink positioning reference signal received from the user equipment.
48. The apparatus according to paragraph 47, wherein transmission of the sidelink positioning reference signal uses a sidelink positioning reference signal resource that comprises at least a set of symbols or resource blocks.
49. The apparatus according to paragraph 48, wherein when the gap symbol exists, the gap symbol comes before the sidelink positioning reference signal resource, or the gap symbol follows the sidelink positioning reference signal resource.
50. The apparatus according to any of paragraphs 47-49, further comprising:
   means for indicating to the user equipment whether the user equipment requested to use the gap symbol for a sidelink positioning reference signal transmission.
51. The apparatus according to any of paragraphs 47-50, further comprising:
   means for indicating to the user equipment an acceptance or a rejection of the existence of the gap symbol as the sidelink positioning reference signal resource.
52. The apparatus according to any of paragraphs 47-51,
   wherein whether the sidelink positioning reference signal resource comprises the gap symbol is indicated in a single bit, or
   wherein whether the sidelink positioning reference signal resource comprises the gap symbol is indicated in a bit per one or more sidelink positioning reference signal resources.
53. The apparatus according to any of paragraphs 47-52, further comprising:
   means for determining whether the sidelink positioning reference signal resource is receivable depending on a starting symbol location; and
   means for determining whether the user equipment will have a reception automatic gain control issue.
54. The apparatus according to any of paragraphs 47-53, further comprising:
   means for providing, to the user equipment, a list of sidelink positioning reference resources, and associated gap symbols for a sidelink positioning reference signal transmission.
55. The apparatus according to any of paragraphs 47-54, further comprising:
   means for receiving a configuration from a network element to enable or disable the request of the gap symbol from the user equipment.
56. An apparatus, comprising:
   means for determining whether a gap symbol is needed before or after a sidelink positioning reference signal;
   means for transmitting, to a user equipment, a sidelink control information indicating whether a gap symbol exists for a sidelink positioning reference signal transmission; and
   means for transmitting, to the user equipment, the sidelink positioning reference signal with or without the gap symbol.
57. The apparatus according to paragraph 56, wherein transmission of the sidelink positioning reference signal uses a sidelink positioning reference signal resource that comprises at least a set of symbols and resource blocks.
58. The apparatus according to paragraph 57, wherein when the gap symbol exists, the gap symbol comes before the sidelink positioning reference signal resource, or the gap symbol follows the sidelink positioning reference signal resource.
59. The apparatus according to any of paragraphs 56-58, further comprising:
   means for receiving, from the user equipment, an indication of whether the gap symbol is requested to be used for the sidelink positioning reference signal transmission.
60. The apparatus according to any of paragraphs 56-59, further comprising:
   means for receiving, from the user equipment, an acceptance or rejection of the existence of the gap symbol as the sidelink positioning reference signal resource.
61. The apparatus according to any of paragraphs 56-60,
   wherein whether the sidelink positioning reference signal resource comprises the gap symbol is indicated in a single bit, or
   wherein whether the sidelink positioning reference signal resource comprises the gap symbol is indicated in a bit per one or more sidelink positioning reference signal resources.
62. The apparatus according to any of paragraphs 56-61, further comprising:
   means for receiving a configuration from a network on whether a gap symbol indication in the sidelink control information is allowed in a resource pool or not.
63. The apparatus according to any of paragraphs 56-62, further comprising:
   means for receiving, from the user equipment, a list of sidelink positioning reference resources, and associated gap symbols that can be used for a sidelink positioning reference signal transmission.
64. The apparatus according to any of paragraphs 56-63, further comprising:
   means for determining a starting symbol for the sidelink positioning reference signal resource; and
   means for indicating the starting symbol in the sidelink control information.
65. An apparatus, comprising:
   means for configuring a user equipment with a configuration that indicates whether the user equipment is allowed to request to use a gap symbol in a sidelink positioning reference signal resource, and
   means for configuring the user equipment with a configuration that indicates whether a gap symbol indication in a sidelink control information is allowed in a resource pool or not.
66. The apparatus according to paragraph 65, wherein the user equipment is an anchor user equipment or a target user equipment.
67. The apparatus according to paragraphs 65 or 66, further comprising:
   means for associating the configuration with at least one resource pool.
68. The apparatus according to paragraph 67, wherein the at least one resource pool comprises a dedicated resource pool for sidelink positioning reference signal transmissions, or a shared pool between a sidelink positioning reference signal and sidelink communication transmissions.
69. The apparatus according to any of paragraphs 65-68, further comprising:
   means for associating the configuration with use of a sidelink positioning method.
70. The apparatus according to paragraph 69, wherein the sidelink positioning method comprises a sidelink time difference of arrival, a sidelink time of arrival, a sidelink angle of arrival, or a sidelink round trip time.
71. A non-transitory computer readable medium comprising program instructions stored thereon for performing the method according to any of paragraphs 1-24.
72. An apparatus comprising circuitry configured to cause the apparatus to perform a process according to any of paragraphs 1-24.
73. Systems, methods, apparatuses, and computer program products for dynamic gap symbol in sidelink positioning reference signal (SL PRS) resource configuration. A method may include receiving, from a user equipment, a sidelink control information indicating whether a gap symbol exists for a sidelink positioning reference signal transmission. The method may also include determining a time domain allocation of the sidelink positioning reference signal. The method may further include receiving, from the user equipment, a sidelink positioning reference signal with or without the gap symbol. In addition, the method may include performing a positioning computation based on the sidelink positioning reference signal received from the user equipment.

## Claims

1. An apparatus, comprising:
at least one processor; and
at least one memory comprising computer program code,
the at least one memory and the computer program code configured to, with storing instructions that, when executed by the at least one processor, cause the apparatus at least to:
configure a user equipment with a configuration that indicates whether the user equipment is allowed to request to use a gap symbol in a sidelink positioning reference signal resource; and
configure the user equipment with a configuration that indicates whether a gap symbol indication in a sidelink control information is allowed in a resource pool or not.

2. The apparatus according to claim 1, wherein the user equipment is an anchor user equipment or a target user equipment.

3. The apparatus according to claims 1 or 2, wherein the apparatus is further configured to:
associate the configuration with at least one resource pool.

4. The apparatus according to claim 3, wherein the at least one resource pool comprises a dedicated resource pool for sidelink positioning reference signal transmissions, or a shared pool between a sidelink positioning reference signal and sidelink communication transmissions.

5. The apparatus according to any of claims 1-4, wherein the apparatus is further configured to:
associate the configuration with use of a sidelink positioning method.

6. The apparatus according to claim 5, wherein the sidelink positioning method comprises a sidelink time difference of arrival, sidelink time of arrest, a sidelink angle of arrival, or a sidelink group trip time.

7. An apparatus, comprising:
at least one processor; and
at least one memory comprising computer program code,
the at least one memory and the computer program code configured to, with storing instructions that, when executed by the at least one processor, cause the apparatus at least to:
receive, from a user equipment, a sidelink control information indicating whether a gap symbol exists for a sidelink positioning reference signal transmission;
determine a time domain allocation of the sidelink positioning reference signal;
receive, from the user equipment, a sidelink positioning reference signal with or without the gap symbol; and
perform a positioning computation based on the sidelink positioning reference signal received from the user equipment.

8. The apparatus according to claim 7, wherein the apparatus is further caused to at least one of:
indicate to the user equipment whether the user equipment requested to use the gap symbol for a sidelink positioning reference signal transmission;
indicate to the user equipment an acceptance or a rejection of the existence of the gap symbol as the sidelink positioning reference signal resource; and
determine whether the sidelink positioning reference signal resource is receivable depending on a starting symbol location; and
determine whether the user equipment will have a reception automatic gain control issue.

9. An apparatus, comprising:
at least one processor; and
at least one memory comprising computer program code,
the at least one memory and the computer program code configured to, with storing instructions that, when executed by the at least one processor, cause the apparatus at least to:
determine whether a gap symbol is needed before or after a sidelink positioning reference signal;
transmit, to a user equipment, a sidelink control information indicating whether a gap symbol exists for a sidelink positioning reference signal transmission; and
transmit, to the user equipment, the sidelink positioning reference signal with or without the gap symbol.

10. The apparatus according to claim 9, wherein the apparatus is further caused to at least one of:
receive, from the user equipment, an indication of whether the gap symbol is requested to be used for the sidelink positioning reference signal transmission;
receive, from the user equipment, an acceptance or rejection of the existence of the gap symbol as the sidelink positioning reference signal resource;
receive a configuration from a network on whether a gap symbol indication in the sidelink control information is allowed in a resource pool or not;
receive, from the user equipment, a list of sidelink positioning reference resources, and associated gap symbols that can be used for a sidelink positioning reference signal transmission; and
determine a starting symbol for the sidelink positioning reference signal resource; and
indicate the starting symbol in the sidelink control information.

11. The apparatus according to claim 7 or 9, wherein transmission of the sidelink positioning reference signal uses a sidelink positioning reference signal resource that comprises at least a set of symbols and resource blocks, and preferably wherein when the gap symbol exists, the gap symbol comes before the sidelink positioning reference signal resource, or the gap symbol follows the sidelink positioning reference signal resource.

12. The apparatus according to any of claims 7-11,
wherein whether the sidelink positioning reference signal resource comprises the gap symbol is indicated in a single bit, or
wherein whether the sidelink positioning reference signal resource comprises the gap symbol is indicated in a bit per one or more sidelink positioning reference signal resources.

13. A method, comprising:
configuring a user equipment with a configuration that indicates whether the user equipment is allowed to request to use a gap symbol in a sidelink positioning reference signal resource; and
configuring the user equipment with a configuration that indicates whether a gap symbol indication in a sidelink control information is allowed in a resource pool or not.

14. A method, comprising:
receiving, from a user equipment, a sidelink control information indicating whether a gap symbol exists for a sidelink positioning reference signal transmission;
determining a time domain allocation of the sidelink positioning reference signal;
receiving, from the user equipment, a sidelink positioning reference signal with or without the gap symbol; and
performing a positioning computation based on the sidelink positioning reference signal received from the user equipment.

15. A method, comprising:
determining whether a gap symbol is needed before or after a sidelink positioning reference signal;
transmitting, to a user equipment, a sidelink control information indicating whether a gap symbol exists for a sidelink positioning reference signal transmission; and
transmitting, to the user equipment, the sidelink positioning reference signal with or without the gap symbol.
